# DEMANDE DE BREVET EUROPEEN

(11) **EP 1 855 453 A1**
(43) Date de publication de la demande: **14.11.2007**
(21) Numéro de dépôt: 06300458.4
(22) Date de dépôt: 11.05.2006
(51) Int. Cl.: H04M 1/73, G06K 19/07

(54) **Gestion de la consommation d'une carte à puce utilisée dans un dispositif mobile**

(71) Demandeur: Axalto SA, 92197 Meudon Cedex (FR)
(72) Inventeur: Joffray, Olivier C/O AXALTO SA, 92190, Meudon (FR)
(74) Mandataire: Cour, Pierre

(57) **Abrégé**

Pour réduire la consommation de la carte à puce d'un téléphone portable en fonction de l'état d'alimentation dudit téléphone, une gestion de mémoire électriquement effaçable est réalisée en fonction de l'état d'alimentation du dispositif mobile. Ainsi, il est proposé un procédé de gestion de mémoire d'un objet amovible placée dans un dispositif mobile, un dispositif mobile et une carte à puce. L'objet amovible comporte au moins une première mémoire non volatile et une deuxième mémoire non volatile. La deuxième mémoire est effaçable électriquement par bloc. L'objet amovible est informé par le dispositif mobile sur l'état d'alimentation du dispositif mobile. Suivant l'état d'alimentation du dispositif mobile, l'effacement de la deuxième mémoire est toujours autorisé (31), partiellement autorisé (35, 36) ou interdit (34).

## Description

L'invention se rapporte à la gestion de la consommation d'une puce d'un objet amovible, telle que par exemple la puce d'une carte SIM d'un téléphone mobile.

Les cartes à puce sont utilisées pour de très nombreuses applications. L'une de ces applications est la gestion des communications en téléphonie mobile. Les cartes à puce utilisées sont par exemple des cartes SIM utilisées dans des téléphones mobiles en conformité avec la norme GSM.

Comme tout objet portable, l'autonomie et la durée d'utilisation sont primordiales pour les téléphones mobiles. Différentes solutions sont mises en oeuvre pour augmenter l'autonomie. Une solution étant de réduire la consommation par une gestion intelligente des différents composants du téléphone. Cette réduction de consommation ne prend pas en compte les nouvelles technologies de carte à puce qui par exemple utilisent de la mémoire Flash en remplacement de la mémoire EEPROM. La mémoire Flash permet d'avoir une plus importante capacité de stockage pour une surface de circuit équivalente. Un inconvénient des mémoires Flash est que leur effacement se fait par bloc de données de grande taille ce qui nécessite un appel de courant plus important.

L'invention propose une solution pour réduire la consommation de la carte à puce d'un téléphone portable en fonction de l'état d'alimentation dudit téléphone. Plus généralement, l'invention permet de réduire la consommation d'un objet amovible placé dans un dispositif mobile en fonction de l'état d'alimentation du dispositif mobile. Une gestion de mémoire électriquement effaçable est réalisée en fonction de l'état d'alimentation du dispositif mobile, afin de réduire la consommation de la carte suivant les conditions d'utilisation du téléphone.

Ainsi, l'invention est un procédé de gestion de mémoire d'un objet amovible placée dans un dispositif mobile. L'objet amovible comporte au moins une première mémoire non volatile et une deuxième mémoire non volatile. La deuxième mémoire est effaçable électriquement par bloc et la première mémoire est effaçable électriquement de manière sélective. Le dispositif mobile comporte une batterie rechargeable et une alimentation externe amovible. Le procédé comporte une étape d'information de l'objet amovible par le dispositif mobile sur l'état d'alimentation du dispositif mobile, et une étape d'effacement où, suivant l'état d'alimentation du dispositif mobile, l'effacement de la deuxième mémoire est toujours autorisé, partiellement autorisé ou interdit.

Préférentiellement, l'information sur l'état d'alimentation indique si l'alimentation du dispositif mobile se fait à l'aide de l'alimentation externe ou à l'aide de la batterie. Si l'alimentation est externe, un bloc de la deuxième mémoire est effacé lors de chaque suppression ou modification de donnée dudit bloc. L'information sur l'état d'alimentation peut indiquer en outre si la batterie est chargée au-dessus ou en dessous d'au moins un seuil prédéterminé. Lorsque l'alimentation se fait à l'aide de la batterie, l'effacement de la deuxième mémoire est partiellement autorisé si la batterie est chargée au-dessus du seuil, et l'effacement de la deuxième mémoire est interdit si la batterie est chargée en dessous du seuil. Lorsque l'effacement de la deuxième mémoire est partiellement autorisé, les emplacements des données à effacer dans un bloc sont marqués dans la première mémoire, et un bloc n'est effacé que si la totalité des emplacements de données du bloc sont marqués à effacer. Selon une variante, lors de la mise sous tension du dispositif mobile, l'objet amovible indique au dispositif mobile qu'il souhaite recevoir des informations sur l'état d'alimentation du dispositif mobile.

Selon un autre aspect, l'invention est un dispositif mobile comportant une batterie rechargeable, une alimentation externe amovible et un objet amovible. L'objet amovible inclut au moins une première mémoire non volatile et une deuxième mémoire non volatile. La deuxième mémoire est effaçable électriquement par bloc et la première mémoire est effaçable électriquement de manière sélective. Le dispositif comporte des moyens pour envoyer un état d'alimentation dudit dispositif à l'objet amovible. L'objet amovible comporte des moyens pour autoriser en totalité, partiellement ou encore pour interdire un effacement de la deuxième mémoire en fonction de l'état d'alimentation du dispositif mobile.

Dans un mode de réalisation préféré, les moyens pour envoyer un état d'alimentation comprennent un contrôleur d'alimentation, un microcontrôleur et une interface de communication. Le contrôleur d'alimentation vérifie la présence ou l'absence de l'alimentation externe et le niveau de charge de la batterie. Le microcontrôleur envoie une information d'état à l'objet amovible lors d'un changement d'état d'alimentation à prendre en compte par l'objet amovible. L'interface de communication est connectée à l'objet amovible. L'objet amovible contient une interface de communication reliée à un microcontrôleur qui autorise l'effacement d'un bloc de la deuxième mémoire lors de l'effacement ou de la modification dudit bloc si l'alimentation externe est connectée au dispositif mobile. Le microcontrôleur peut autoriser un effacement partiel de la deuxième mémoire lorsque le dispositif mobile est alimenté par la batterie et si la batterie est chargée au-dessus d'un seuil prédéterminé. Les emplacements des données à effacer ou à remplacer dans un bloc de la deuxième mémoire sont marqués dans la première mémoire, et un bloc n'est effacé que si la totalité des emplacements de données du bloc sont marqués à effacer.

Selon un troisième aspect, l'invention est une carte à puce destinée à fonctionner dans un dispositif mobile disposant d'une alimentation par batterie et d'une alimentation externe par batterie. La carte à puce comprend une interface de communication, une première mémoire non volatile effaçable électriquement de manière sélective, une deuxième mémoire non volatile effaçable électriquement par bloc, et un microcontrôleur relié à l'interface de communication et à la deuxième mémoire et pouvant, lire, écrire et effacer des données dans ladite deuxième mémoire. Le microcontrôleur effectue des effacements de bloc dans la deuxième mémoire en fonction des données à effacer et en fonction d'un état d'alimentation du dispositif mobile. Lorsqu'un bloc n'est pas effacé, l'emplacement de la donnée à effacer est marqué à effacer dans la première mémoire.

L'invention sera mieux comprise, et d'autres particularités et avantages apparaîtront à la lecture de la description qui va suivre, la description faisant référence aux dessins annexés, parmi lesquels :
la figure 1 représente un téléphone portable mettant en oeuvre l'invention,
la figure 2 représente une carte à puce mettant en oeuvre l'invention,
la figure 3 illustre le fonctionnement de la carte lors d'une demande d'effacement,
la figure 4 illustre une organisation de mémoire selon l'invention, et
la figure 5 illustre une variante d'organisation de mémoire.

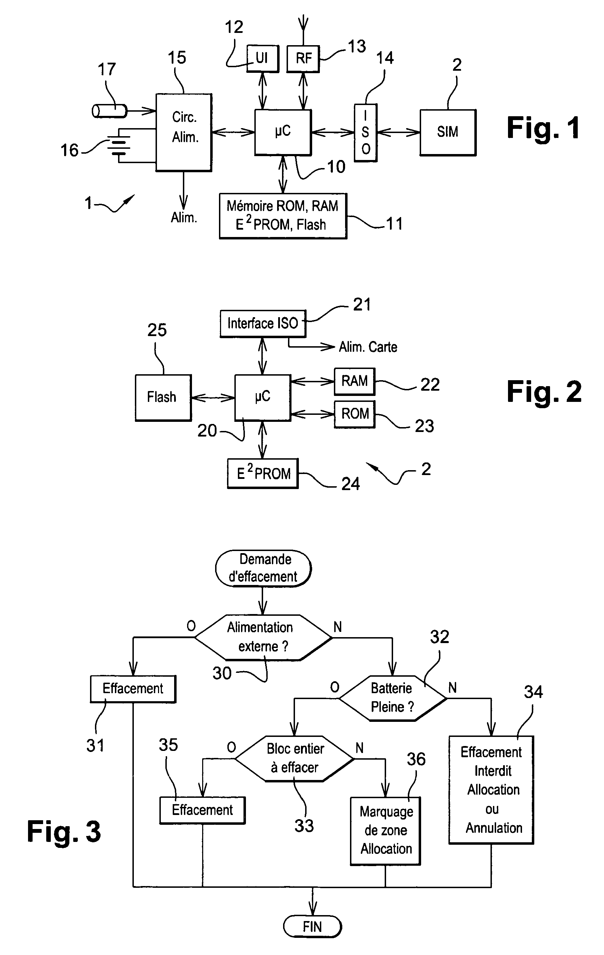

La figure 1 représente schématiquement un téléphone portable 1. Le téléphone portable 1 comporte un microcontrôleur 10 qui est le coeur du téléphone 1 et sert à coordonner et/ou effectuer les différentes opérations nécessaires au fonctionnement du téléphone. Le microcontrôleur 10 est couplé à des mémoires 11 qui peuvent être de différents types. Les mémoires 11 comprennent de la mémoire volatile de type RAM qui sert de mémoire de travail, et des mémoires non volatiles de types ROM, E²PROM ou Flash, qui servent de mémoires pour des programmes ou des données à stocker de manière permanente. Le téléphone 1 comporte une interface utilisateur 12, par exemple un écran, un clavier, un micro et un haut-parleur, également couplée au microcontrôleur 10. L'interface utilisateur 12 permet à un utilisateur d'interagir avec le téléphone 1. Une interface radio 13, reliée au microcontrôleur 10 permet d'échanger des données de manière bidirectionnelle avec un réseau de communication. Une interface pour carte 14 reçoit une carte à puce 2, par exemple une carte SIM. La carte à puce 2 contient des informations confidentielles permettant de clairement identifier un abonné dans le réseau de communication. Cette carte à puce peut également contenir différents programmes et informations relatifs à des services ou des applications à destination du téléphone et/ou de l'utilisateur.

Un circuit d'alimentation 15 fournit une ou plusieurs tensions d'alimentation régulées « Alim » à tous les éléments constituant le téléphone. La tension d'alimentation provient soit d'une batterie rechargeable 16 située dans le téléphone 1, soit d'une alimentation externe par l'intermédiaire d'un connecteur 17. En plus de fournir des tensions d'alimentations régulées, le circuit d'alimentation 15 gère la recharge de la batterie lorsque l'alimentation externe est connectée au connecteur 17. En outre, le circuit d'alimentation 15 fournit au microcontrôleur 10 une information d'état sur l'alimentation et la charge de la batterie.

Dans l'état de la technique l'information d'état d'alimentation et de charge de la batterie est visualisée pour informer l'utilisateur, par exemple avec un système de graduation sur la charge de la batterie et un témoin de charge lorsque la batterie se recharge. Cette information d'état peut également être utilisée par le microcontrôleur 10 pour activer ou désactiver certains circuits afin de réduire la consommation du téléphone 1. Selon l'invention, cette information d'état est également fournit à la carte à puce 2 afin que la carte à puce 2 puisse également tenir compte de l'état d'alimentation pour réguler sa propre consommation d'énergie.

Afin de mieux détailler le fonctionnement de l'invention, il convient de détailler la constitution d'une carte à puce 2 à l'aide de la figure 2. La carte à puce 2 est par exemple constituée d'un unique circuit intégré qui comporte un microcontrôleur 20, une interface de communication 21, une mémoire volatile 22, une mémoire non volatile non effaçable 23, une première mémoire non volatile effaçable électriquement 24 et une seconde mémoire non volatile effaçable électriquement 25. D'autres éléments peuvent également être ajoutés dans la carte à puce 2 sans que cela intervienne sur la mise en oeuvre de l'invention.

L'interface de communication 21 est par exemple une interface conforme au standard ISO 7816, mais pourrait être compatible avec un autre standard, tel que par exemple le standard USB. L'important est que cette interface permette de recevoir une tension d'alimentation destinée à alimenter les composants de la carte à puce et également à échanger des données de manière bidirectionnelle. Le microcontrôleur 20 assure la gestion des différents composants de la carte et des échanges de données avec le téléphone 1 auquel la carte 2 est connectée.

La mémoire volatile 22 est une mémoire de travail, par exemple de type RAM qui sert à mémoriser de manière temporaire des données utilisées par le microcontrôleur lors de son fonctionnement. La mémoire non volatile et non effaçable 23 est par exemple une mémoire de type ROM qui contient des programmes non effaçables, cette mémoire est configurée lors de la fabrication du circuit intégré. Selon une variante, le contenu de cette mémoire peut être intégré dans une mémoire non volatile effaçable et cette mémoire 23 peut être supprimée.

La première mémoire non volatile effaçable électriquement 24 est une mémoire de faible capacité et qui est effaçable de manière très sélective, tel que par exemple une mémoire de type EEPROM ou E²PROM. Dans l'invention, cette première mémoire 24 sert à la gestion de la deuxième mémoire non volatile effaçable électriquement 25. La deuxième mémoire non volatile effaçable électriquement 25 est une mémoire de grande capacité destinée à mémoriser des programmes et des données. Cette deuxième mémoire 25 peut en outre comporter des zones sécurisées comme connues dans l'état de la technique. La deuxième mémoire 25 est par exemple une mémoire de type Flash dont l'effacement se fait par bloc de données d'une taille prédéfinie.

Une particularité des mémoires Flash est qu'elles permettent une intégration de point mémoire plus important qu'une mémoire de type EEPROM. Cette amélioration d'intégration est due, entre autre, à l'utilisation de l'effacement par bloc de données qui permet de réduire le nombre de transistors mais il y a suppression d'un effacement sélectif. L'écriture peut se faire par mot ou par page, un bloc comprenant plusieurs pages et une page plusieurs mots. Les mémoires Flash sont préférées aux autres E²PROM pour stocker un nombre important de données.

Pour effacer ou remplacer une donnée, par exemple un mot de huit bits, à l'intérieur d'un bloc de donnée, l'opération nécessite l'effacement complet du bloc puis sa réécriture en omettant la donnée effacée ou en la remplaçant par une donnée de remplacement. Une telle gestion de l'effacement d'un mot de huit bits nécessite l'effacement d'un bloc dont la taille peut être d'un ou plusieurs kilo-octets soit plus de 8000 bits. Le courant d'appel nécessaire à l'effacement est alors au moins mille fois plus important que nécessaire.

Afin de limiter la consommation de la carte à puce 2 l'invention propose de gérer les effacements de la deuxième mémoire 25 en fonction de l'état d'alimentation du téléphone 1. A cet effet, il convient que le téléphone 1 informe régulièrement la carte à puce 2 sur son état d'alimentation. Selon les différentes normes existantes, il n'est pas prévu de transférer une telle information. Par contre, il est possible à la carte à puce 2 de transférer au téléphone 1 des applications ou programmes lors de la mise sous tension de la carte à puce 2. Ce transfert de programme se fait par exemple à l'aide du module standardisé SIMTooIKit.

Le programme transféré dans le téléphone 1 sert à envoyer à la carte à puce l'état d'alimentation fournit par le circuit d'alimentation 15 au microcontrôleur 10. Cet état d'alimentation peut être simplifié par le microcontrôleur 10. Une information importante est l'indication de la connexion de l'alimentation externe ou non. Une autre information peut être la comparaison du niveau de charge de la batterie par rapport à un seuil. Eventuellement, il est possible d'indiquer de manière plus fine le niveau de charge de la batterie.

Dans l'exemple préféré décrit, le téléphone 1 se contente d'indiquer si l'alimentation externe est connectée et si la batterie est fortement chargée, c'est à dire à un niveau supérieur à un seuil prédéterminé, ou faiblement chargée, c'est à dire à un niveau inférieur au seuil prédéterminé. II va de soit qu'un nombre de seuils plus important peut être utilisé par un homme du métier. Ces informations sont transmises à la carte à puce 2 lors de chaque changement d'état d'alimentation. La carte à puce 2 mémorise ces informations d'alimentation par exemple dans la mémoire volatile 22.

En cas d'effacement d'une donnée dans la deuxième mémoire 25, le microcontrôleur 20 va prendre en compte les informations d'état d'alimentation. En cas de remplacement d'une donnée, la donnée à remplacer doit préalablement être effacée et une demande d'effacement est alors effectuée. La prise en compte de l'état d'alimentation pour l'effacement d'une donnée est illustrée à l'aide de l'organigramme de la figure 3.

En réponse à une demande d'effacement, le microcontrôleur 20 effectue un premier test 30. Le premier test 30 consiste à vérifier si le téléphone est alimenté par son alimentation externe. Si l'alimentation externe est branchée alors une étape d'effacement 31 peut être réalisée. Si l'alimentation externe n'est pas branchée alors le microcontrôleur 20 effectue un deuxième test 32.

L'étape d'effacement 31 consiste à réaliser l'effacement du bloc qui contient la donnée et à réécrire les données du bloc qui ne sont pas effacées. La mémoire volatile 22 sert de tampon de données pour mémoriser les données du bloc qui ne sont pas effacées. Si la donnée est remplacée, il est possible de réécrire la donnée dans la mémoire volatile 22 avant de recopier le bloc à sa place d'origine dans la deuxième mémoire 25.

Le deuxième test 32 sert à vérifier l'état de charge de la batterie. Si la charge de la batterie est supérieure au seuil de chargement prédéterminé alors le microcontrôleur considère que la batterie est pleine et il réalise un troisième test 33. Si la charge de la batterie est inférieure au seuil de chargement prédéterminé alors le microcontrôleur considère que la batterie est vide et il effectue une étape de gestion de mémoire 34.

L'étape de gestion de mémoire 34 interdit tout effacement de la deuxième mémoire 25. A la place de l'effacement, un marquage de la donnée à effacer est effectué dans la première mémoire 24 et une allocation de nouveau bloc est réalisée pour la donnée marquée effacée. Un exemple de marquage et d'allocation sera détaillé par la suite. S'il n'est pas possible d'allouer un nouveau bloc dans la deuxième mémoire 25, alors l'opération d'effacement est annulée et l'opérateur et/ou le programme demandant l'effacement est/sont averti(s) que l'opération est annulée.

Le troisième test 33 vérifie si la totalité du bloc est à effacer ou non. La vérification s'effectue en contrôlant l'état d'effacement du bloc dans la première mémoire 24. Si la totalité du bloc est à effacer, alors le microcontrôleur 20 effectue l'étape d'effacement 35. Si la totalité du bloc n'est pas à effacer alors le microcontrôleur 20 effectue l'étape de gestion de mémoire 36.

L'étape d'effacement 35 consiste à effacer tout le bloc concerné de la deuxième mémoire et à indiquer dans la première mémoire que le bloc est vide. Toutefois, il convient d'indiquer dans la première mémoire 34 le lien avec le bloc contenant les données qui auraient du être inscrites dans ledit bloc.

L'étape de gestion de mémoire 36 vise à marquer l'effacement dans la première mémoire 24 et à allouer un bloc de remplacement dans la deuxième mémoire 25. Toutefois, s'il n'est plus possible d'allouer un nouveau bloc de mémoire, il est possible d'effacer un bloc contenant beaucoup de données à effacer.

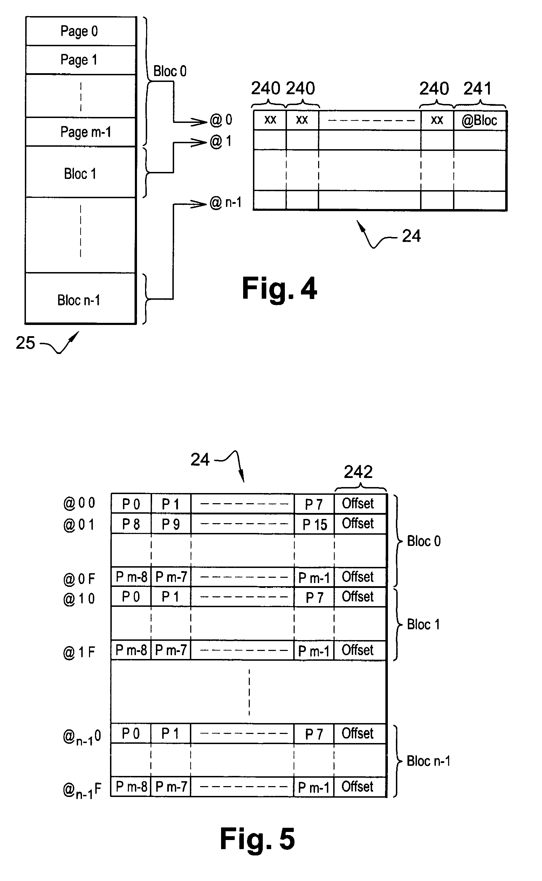

La gestion de la deuxième mémoire 25 à l'aide de la première mémoire 24 peut se faire très simplement. Un premier exemple de mise en oeuvre de gestion est décrit à l'aide de la figure 4. La mémoire 25 est organisée en n blocs de mémoire, chaque bloc étant divisé en m pages, n et m étant des entiers. A titre d'exemple, n est égal à 64, m est égal à 32, chaque page comportant 32 octets. A chaque bloc de la deuxième mémoire 25 correspond un mot dans la première mémoire 24. L'adresse d'un mot de la première mémoire 24 correspond ainsi à un numéro de bloc de la deuxième mémoire 25. Chaque mot de la première mémoire 24 est représentatif de l'état d'écriture du bloc associé de la deuxième mémoire 25. Chaque page d'un bloc est représenté par deux bits d'état 240. En outre, chaque mot de la première mémoire 24 comporte une adresse de re-direction de bloc 241 qui sert à rediriger une page du bloc associé vers un autre bloc de la deuxième mémoire. Un bit de l'adresse peut indiquer si la re-direction est effective ou non.

Les deux bits 240 associé à une page peuvent prendre trois états en fonction de l'état de la page associée. Ces états sont détaillés dans le tableau suivant :

| Etat Bits 240 | Etat de la page associée |
|---|---|
| 00 | Page vide, écriture possible |
| 01 | Page écrite, données valides |
| 11 | Page à effacer, données non valides |

Préférentiellement, on choisit les bits qui correspondent à des bits effacés de la première mémoire 24 pour indiquer qu'une page est vide. Ainsi une écriture d'un bit permet de marquer l'écriture de la page et l'écriture d'un autre bit permet d'indiquer que la page est à effacer sans qu'il soit besoin d'avoir recours à un effacement. L'effacement d'un mot de la première mémoire 24 est à réaliser uniquement lorsque l'on efface le bloc qui lui est associé.

Lors d'un fonctionnement avec alimentation externe, les blocs de la deuxième mémoire 25 sont effacés systématiquement et réécrit s'il y a lieu. La première mémoire 24 reflète alors uniquement l'état d'écriture de la deuxième mémoire 25. Les bits d'état 240 indiquent uniquement si une page est vide ou écrite. Les adresses de re-direction de bloc 241 sont complètement effacées. Tant que l'alimentation extérieure est connectée, les blocs sont effacés et réécrit et le contenu de la première mémoire 24 est mis à jour en conséquence.

Lorsque l'on est en fonctionnement sur batterie, les effacements de blocs sont restreints. L'effacement d'une page se fait uniquement en marquant dans la première mémoire 24 que la page est à effacer. Une telle opération correspond à écrire un bit, ce qui est peu coûteux en terme de consommation de courant par rapport à l'effacement d'un bloc complet qui doit être partiellement réécrit.

Si la page effacée doit être réécrite, celle-ci est écrite dans un autre bloc. Dans cet exemple, un bloc est alloué en substitution d'un autre bloc. Ainsi, lorsqu'une donnée d'un bloc doit être réécrite et qu'il n'y a pas d'adresse de re-direction de bloc 241, il convient d'allouer un bloc de substitution. Tout d'abord, on cherche dans la première mémoire 24 si un bloc est complètement vide, par exemple en vérifiant que toutes les pages sont vides et que le bloc n'est pas lui-même redirigé vers un autre bloc, ni qu'aucun bloc n'est déjà redirigé sur lui. Lorsqu'un bloc disponible est trouvé, alors on indique le numéro de bloc comme adresse de re-direction de bloc 241 pour le bloc dans lequel on souhaite réécrire.

Lorsque l'on souhaite réécrire dans une page marquée à effacer d'un bloc, il convient alors d'écrire dans la page correspondante du bloc correspondant à l'adresse de re-direction 241. Si la page du bloc de re-direction est elle-même à effacer, il est possible de rediriger à nouveau le bloc vers un autre bloc, tant qu'il reste un bloc disponible. Pour une opération de lecture d'information dans la deuxième mémoire 25 lorsque l'alimentation se fait sur la batterie, il convient également de consulter le contenu de la première mémoire 24 afin de re-diriger l'adresse de lecture vers une page valide si la page à lire ne contient pas de données valides.

Lorsque la totalité d'un bloc est marquée à effacer et que la batterie est suffisamment chargée pour autoriser un effacement optimisé, correspondant à l'étape 35, le bloc à effacer est effacé intégralement et les bits d'état 240 correspondant sont positionnés pour indiquer que les pages sont vides mais si le bloc est redirigé, on conserve l'adresse de re-direction. Ainsi lors d'une lecture dans une page vide, la lecture s'effectue dans le bloc correspondant à la re-direction. De même, si l'on souhaite effacer une page vide, c'est que l'effacement concerne le bloc de re-direction.

Un système comme celui-ci a tendance à utiliser beaucoup de bloc et il convient de purger l'intégralité de la mémoire dès lors que l'alimentation externe alimente le téléphone 1. Purger la mémoire revient à reconstruire les blocs d'origine à l'aide des blocs de re-direction puis à effacer les blocs servant à la re-direction.

Ce système de gestion de mémoire peut être relativement performant lorsque l'on gère des données stockées de manière séquentielle dans un bloc car le bloc est progressivement effacé puis réécrit, et un seul bloc de re-direction peut suffire par bloc de données mémorisées. Par contre, pour gérer des données qui changent fréquemment à l'intérieur d'un bloc, la mémoire utilise plusieurs blocs de re-direction mais de manière incomplète, et il peut y avoir une saturation de la mémoire.

Une variante consiste à gérer les re-directions avec des groupes de données d'une taille inférieure à la taille d'un bloc. Seul l'organisation de la première mémoire 24 change, comme montré sur la figure 5. Dans cet exemple, on considère une deuxième mémoire de type Flash comportant 64 blocs de 2 kilo-octets. Chaque bloc se décompose en 128 pages de 16 octets. Dans la première mémoire 24, chaque bloc est associé à seize mots d'adresses successives, les bits de poids fort de l'adresse étant représentatifs du numéro de bloc associé et les bits de poids faible de l'adresse étant représentatifs de l'ordre des pages associées dans le bloc. Les mots de la première mémoire 24 sont des mots de 32 bits dont seize bits sont associés à huit pages de la deuxième mémoire 25 et seize bits indiquent un décalage d'adresse 242, classiquement appelé « offset », à appliquer sur l'une des pages associées lorsque les données de la page sont redirigées. Dans l'exemple présent 13 bits peuvent suffire mais l'ajout de bits supplémentaire permet d'avoir un décalage d'adresse 242 aussi bien positif que négatif.

Avec un tel plan de mémoire, la re-direction de données se fait de manière similaire à ce qui a été détaillé précédemment. Préférentiellement, le décalage d'adresse 242 correspond à un décalage d'un bloc s'il est possible d'affecter un bloc entier. S'il ne reste plus de bloc entièrement disponible, alors on affecte les données à un groupe de page disponible.

Cette variante de gestion permet de saturer moins rapidement la mémoire lorsque qu'une donnée d'un bloc est souvent réécrite. Cependant, avec cet exemple de mise en oeuvre, il convient également de purger la mémoire dès que l'alimentation extérieure est connectée au téléphone afin de prévenir une éventuelle saturation de la mémoire lorsque le téléphone fonctionne sur batterie.

## Revendications

1. Procédé de gestion de mémoire d'un objet amovible (2) placée dans un dispositif mobile (1), l'objet amovible (2) comportant au moins une première mémoire non volatile (24) et une deuxième mémoire non volatile (25), la deuxième mémoire étant effaçable électriquement par bloc et la première mémoire (24) étant effaçable électriquement de manière sélective, le dispositif mobile (1) comportant une batterie rechargeable (16) et une alimentation externe (17) amovible, **caractérisé en ce qu'**il comporte :
- une étape d'information de l'objet amovible par le dispositif mobile sur l'état d'alimentation du dispositif mobile, et
- une étape d'effacement où, suivant l'état d'alimentation du dispositif mobile, l'effacement de la deuxième mémoire (25) est toujours autorisé, partiellement autorisé ou interdit.

2. Procédé selon la revendication 1, dans lequel l'information sur l'état d'alimentation indique si l'alimentation du dispositif mobile se fait à l'aide de l'alimentation externe ou à l'aide de la batterie, et dans lequel, si l'alimentation est externe, un bloc de la deuxième mémoire (25) est effacé (31) lors de chaque suppression ou modification de donnée dudit bloc.

3. Procédé selon la revendication 2, dans lequel l'information sur l'état d'alimentation indique en outre si la batterie est chargée au-dessus ou en dessous d'au moins un seuil prédéterminé, et dans lequel, lorsque l'alimentation se fait à l'aide de la batterie, l'effacement de la deuxième mémoire (25) est partiellement autorisé si la batterie est chargée au-dessus du seuil (35, 36), et l'effacement de la deuxième mémoire (25) est interdit (34) si la batterie est chargée en dessous du seuil.

4. Procédé selon l'une des revendications précédentes, dans lequel, lorsque l'effacement de la deuxième mémoire (25) est partiellement autorisé, les emplacements des données à effacer dans un bloc sont marqués dans la première mémoire (24), et un bloc n'est effacé que si la totalité des emplacements de données du bloc sont marqués à effacer.

5. Procédé selon l'une des revendications précédentes, dans lequel, lors de la mise sous tension du dispositif mobile, l'objet amovible indique au dispositif mobile qu'il souhaite recevoir des informations sur l'état d'alimentation du dispositif mobile.

6. Dispositif mobile (1) comportant une batterie rechargeable (16), une alimentation externe (17) amovible et un objet amovible (2) incluant au moins une première mémoire non volatile (24) et une deuxième mémoire non volatile (25), la deuxième mémoire (25) étant effaçable électriquement par bloc et la première mémoire (24) étant effaçable électriquement de manière sélective, **caractérisé en ce que** le dispositif comporte des moyens pour envoyer un état d'alimentation dudit dispositif à l'objet amovible et **en ce que** l'objet amovible comporte des moyens pour autoriser en totalité (31), partiellement (35, 36) ou encore pour interdire (34) un effacement de la deuxième mémoire (25) en fonction de l'état d'alimentation du dispositif mobile.

7. Dispositif mobile selon la revendication 6, dans lequel les moyens pour envoyer un état d'alimentation comprennent :
- un contrôleur d'alimentation (15) qui vérifie la présence ou l'absence de l'alimentation externe et le niveau de charge de la batterie,
- un microcontrôleur (10) qui envoie une information d'état à l'objet amovible (2) lors d'un changement d'état d'alimentation à prendre en compte par l'objet amovible,
- une interface de communication (14) connectée à l'objet amovible.

8. Dispositif mobile selon la revendication 6 ou 7, dans lequel l'objet amovible (8) contient une interface de communication (21) reliée à un microcontrôleur (20) qui autorise l'effacement (31) d'un bloc de la deuxième mémoire (25) lors de l'effacement ou de la modification dudit bloc si l'alimentation externe est connectée au dispositif mobile.

9. Dispositif mobile selon la revendication 8, dans lequel le microcontrôleur (20) autorise un effacement partiel (35, 36) de la deuxième mémoire (25) lorsque le dispositif mobile est alimenté par la batterie (16) et si la batterie est chargée au-dessus d'un seuil prédéterminé, les emplacements des données à effacer ou à remplacer dans un bloc de la deuxième mémoire (25) sont marqués dans la première mémoire (24), et un bloc n'est effacé que si la totalité des emplacements de données du bloc sont marqués à effacer.

10. Dispositif mobile selon l'une des revendications 6 à 9, dans lequel le dispositif mobile est un téléphone mobile et la l'objet amovible est une carte à puce.

11. Carte à puce (2) destinée à fonctionner dans un dispositif mobile disposant d'une alimentation par batterie et d'une alimentation externe par batterie, ladite carte comprenant :
- une interface de communication (21),
- une première mémoire non volatile (24) effaçable électriquement de manière sélective,
- une deuxième mémoire non volatile (25) effaçable électriquement par bloc,
- un microcontrôleur (20) relié à l'interface de communication (21) et à la deuxième mémoire (25) et pouvant, lire, écrire et effacer des données dans ladite deuxième mémoire (25),
**caractérisée en ce que** le microcontrôleur (20) effectue des effacements de bloc dans la deuxième mémoire (25) en fonction des données à effacer et en fonction d'un état d'alimentation du dispositif mobile, lorsqu'un bloc n'est pas effacé, l'emplacement de la donnée à effacer est marqué à effacer dans la première mémoire (24).

12. Carte à puce selon la revendication 11, laquelle comporte un programme qui est transféré au dispositif mobile lors de la mise sous tension afin que le dispositif envoie son état d'alimentation lors de chaque changement d'état.
